# EUROPEAN PATENT APPLICATION

(11) **EP 4 835 536 A1**
(43) Date of publication of application: **04.11.2026**
(21) Application number: 24940466.6
(22) Date of filing: 08.11.2024
(51) Int. Cl.: G02B 7/12, G02B 23/18, G02B 7/06, G02B 25/00

(54) **PUPILLARY DISTANCE ADJUSTING STRUCTURE AND MULTI-CHANNEL OBSERVATION DEVICE**

(30) Priority: 10.05.2024 CN 202410577616; 09.10.2024 CN 202422435127 U
(71) Applicant: Raytron Technology Co., Ltd., Yantai, Shandong 264006 (CN)
(72) Inventor: SUN, Yingchao, Yantai, Shandong 264006 (CN); SUI, Haibo, Yantai, Shandong 264006 (CN)
(74) Representative: Reiser & Partner Patentanwälte mbB
(86) International application number: PCT/CN2024/131049
(87) International publication number: WO 2025/232123

(57) **Abstract**

The present application provides an interpupillary distance adjustment structure and a binocular observation device. The interpupillary distance adjustment structure comprises: a bridge frame; a bridge connecting member for rotatably connecting a lens barrel assembly to the bridge frame; and an adjustment assembly connected to the bridge frame. One of the bridge connecting member and the adjustment assembly is provided with an insertion portion, and the other of the adjustment assembly and the bridge connecting member comprises a sleeved portion corresponding to the insertion portion, a mating surface between the insertion portion and the sleeved portion being an inclined surface. Under an action of a rotational external force, the bridge connecting member rotates relative to the bridge frame to adjust to a target interpupillary distance; and after the external force is removed, the inclined surface provides an axial friction force and a radial friction force to maintain the target interpupillary distance.

## Description

The present application claims priority to Chinese Patent Application No. 202410577616.9, filed with the China National Intellectual Property Administration on May 10, 2024, entitled "INTERPUPILLARY DISTANCE ADJUSTMENT STRUCTURE AND BINOCULAR OBSERVATION DEVICE", and Chinese Patent Application No. 202422435127.8, filed with the China National Intellectual Property Administration on October 9, 2024, entitled "INTERPUPILLARY DISTANCE ADJUSTMENT STRUCTURE AND MULTI-OCULAR OBSERVATION DEVICE", the entire contents of which are incorporated herein by reference.

### TECHNICAL FIELD

The present application relates to the technical field of optical equipment, and more particularly, to an interpupillary distance adjustment structure and a multi-ocular observation device.

### BACKGROUND

With the continuous development of display technology, projection technology, artificial intelligence and other technologies, various product types and functions for enhancing user observation capabilities are constantly being innovated and enriched, such as portable optical devices, VR devices, head-mounted optical devices, and the like. For ease of description and understanding, products involving binocular observation needs for users are collectively referred to as binocular observation devices in the present disclosure. Since the interpupillary distance may differ from one user to another, how to ensure that a binocular observation device can satisfactorily meet the needs of users having different interpupillary distances is an essential element in product design.

Currently, the inventors have found in research that known interpupillary distance adjustment technologies for binocular observation devices mainly rely on structural limiting for adjustment. Taking a head-mounted low-light-level night vision device as an example, a night vision device, as a common nighttime observation tool, can greatly assist users in improving the efficiency of nighttime activities, target searching and identification. Its working principle is to convert low-illumination light unrecognizable by the human eye into visible light, and amplify it through an optical system to increase brightness and clarity, enabling the human eye to easily identify and monitor targets. However, existing interpupillary distance adjustment technologies for head-mounted low-light-level night vision devices rely solely on structural limiting for adjustment, and the stability of such structural limiting is poor. Moreover, the interpupillary distance needs to be readjusted repeatedly each time the device is used, resulting in inconvenient use.

### SUMMARY

To address the technical problems existing in the prior art, the present application provides an interpupillary distance adjustment structure and a multi-ocular observation device that are simple to operate, more convenient for interpupillary distance adjustment, and have high stability.

In a first aspect, an interpupillary distance adjustment structure is provided, comprising:
a bridge frame;
a bridge connecting member for rotatably connecting a lens barrel assembly to the bridge frame; and
an adjustment assembly connected to the bridge frame;
wherein one of the bridge connecting member and the adjustment assembly is provided with an insertion portion, and the other of the adjustment assembly and the bridge connecting member comprises a sleeved portion corresponding to the insertion portion, a mating surface between the insertion portion and the sleeved portion is an inclined surface;
under an action of a rotational external force, the bridge connecting member rotates relative to the bridge frame to adjust to a target interpupillary distance; and after the external force is removed, the inclined surface provides an axial friction force and a radial friction force to maintain the target interpupillary distance.

In a second aspect, a multi-ocular observation device is further provided, comprising a left lens barrel assembly, a right lens barrel assembly, and the interpupillary distance adjustment structure according to any embodiment of the present application;
wherein the left lens barrel assembly and the right lens barrel assembly are respectively connected to the bridge frame through corresponding bridge connecting members.

The interpupillary distance adjustment structure provided in the above embodiments, through the arrangement of the bridge connecting member and the adjustment assembly, the bridge connecting member rotatably connects the lens barrel assembly to the bridge frame, the adjustment assembly is connected to the bridge frame, and the adjustment assembly and the bridge connecting member are provided with mutually cooperating insertion portion and sleeved portion. By utilizing the arrangement in which the mating surface between the insertion portion and the sleeved portion is an inclined surface, under the action of a rotational external force (such as directly gripping the lens barrel assemblies and rotating them in a relatively away direction), the bridge connecting member is capable of rotating relative to the bridge frame to adjust the interpupillary distance, and after the adjustment is in place, upon removal of the external force, the inclined surface is capable of providing axial frictional force and radial frictional force to maintain the interpupillary distance at the desired magnitude. In this manner, stepless adjustment of the interpupillary distance is achieved through end surface friction between the insertion portion of the bridge connecting member and the sleeved portion of the adjustment assembly, which is not only simple to operate and more convenient for interpupillary distance adjustment, but also, in the absence of external force, the inclined surface can simultaneously provide component forces in both the axial and radial directions to maintain the target interpupillary distance, thereby exhibiting high stability.

In the above embodiments, the multi-ocular observation device and the corresponding interpupillary distance adjustment structure belong to the same inventive concept, and thus have the same technical effects as the interpupillary distance adjustment structure, which will not be repeated herein.

### BRIEF DESCRIPTION OF THE DRAWINGS

FIG. 1 is an overall schematic view of a binocular observation device according to an embodiment.
FIG. 2 is an overall schematic view of the binocular observation device of FIG. 1 from another angle.
FIG. 3 is an exploded view of the binocular observation device of FIG. 1.
FIG. 4 is an exploded view of the binocular observation device of FIG. 3 from another angle.
FIG. 5 is a cross-sectional view of a portion circled by V of the binocular observation device of FIG. 1.
FIG. 6 is a front view of a connection position between a plate adapter and a bridge connecting member according to an embodiment.
FIG. 7 is a front view of the connection position between the plate adapter and the bridge connecting member shown in FIG. 6 in another state.
FIG. 8 is an overall schematic view of a multi-ocular observation device according to an embodiment.
FIG. 9 is a schematic view of the multi-ocular observation device shown in FIG. 8 in a folded state.
FIG. 10 is a partial schematic view of an assembly position of a limiting adjustment assembly in the multi-ocular observation device shown in FIG. 8.
FIG. 11 is a cross-sectional view of the assembly position of the limiting adjustment assembly, taking a right plate adapter as an example.
FIG. 12 is a top view of the assembly position of the limiting adjustment assembly, taking a right plate adapter as an example.
FIG. 13 is a top view of the right plate adapter.
FIG. 14 is a perspective view of the right plate adapter.
FIG. 15 is a top view of a rotary adjustment member.
FIG. 16 is a perspective view of the rotary adjustment member.
FIG. 17 is an exploded view of the multi-ocular observation device according to an embodiment.
FIG. 18 is an exploded view of the multi-ocular observation device according to an embodiment in another state.

### Description of Reference Numerals:

bridge frame 10; bridge connecting member 20; left bridge connecting member 21; right bridge connecting member 22; insertion portion 23; first inclined surface 230; lens barrel assembly 30; left lens barrel assembly 31; right lens barrel assembly 32; adjustment assembly 40; limiting adjustment assembly 40'; plate adapter 41; receiving hole 410; first connecting portion 411; second connecting portion 412; rib 414; first end 415; second end 416; first limiting structure 417; left plate adapter 418; right plate adapter 419; locking member 43; rotary adjustment member 43'; second inclined surface 430; sleeved portion 431; protrusion 434; first stop side 435; second stop side 436; second limiting structure 437; interpupillary distance adjustment structure 60; first fastener 61; second fastener 62; third fastener 63; fixing pin 611; fastening screw 621; washer 64; back-up spring washer 65.

### DESCRIPTION OF THE EMBODIMENTS

The technical solutions of the present application will be further described in detail below with reference to the accompanying drawings and specific embodiments.

Unless otherwise defined, all technical and scientific terms used herein have the same meanings as commonly understood by one of ordinary skill in the art to which the present application pertains. The terms used in the description of the present application herein are for the purpose of describing particular embodiments only, and are not intended to limit the scope of the present application. As used herein, the term "and/or" includes any and all combinations of one or more of the associated listed items.

In the following description, it is to be understood that terms such as "center", "upper", "lower", "front", "rear", "left", "right", "vertical", "horizontal", "top", "bottom", "inner", "outer", and the like, indicating orientation or positional relationships, are based on the orientation or positional relationships shown in the drawings, and are merely for convenience of description and simplification of the present application, rather than indicating or implying that the referenced apparatus or element must have a particular orientation, or be constructed or operated in a particular orientation. Accordingly, such terms are not to be construed as limiting the present application. In the description of the present application, unless otherwise specified, "a plurality of" means two or more.

In the following description, it is to be noted that, unless otherwise explicitly specified and limited, the terms "mount", "connect", and "join" are to be construed broadly. For example, a connection may be a fixed connection, a detachable connection, or an integral connection; it may be a direct connection, or an indirect connection through an intermediary, or an internal communication between two elements. Those of ordinary skill in the art will understand the specific meanings of such terms in the context of the present application according to particular circumstances.

In the following description, reference to "some embodiments" describes a subset of all possible embodiments. It is to be noted that "some embodiments" may be the same subset or different subsets of all possible embodiments, and may be combined with one another without conflict.

In the following description, the terms "first", "second", and "third" are used merely to distinguish between similar objects, and do not denote any particular ordering or quantity. It will be understood that "first", "second", and "third" may be interchanged in order or sequence as permitted, so that the embodiments of the present application described herein may be implemented in an order other than that illustrated or described herein.

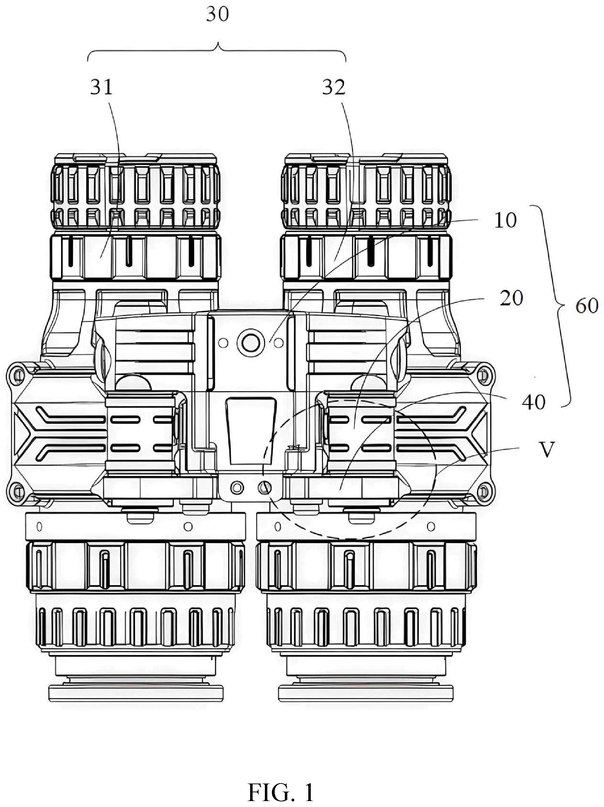

Referring to FIG. 1, a binocular observation device according to an embodiment of the present application is shown, comprising a left lens barrel assembly 31, a right lens barrel assembly 32, and an interpupillary distance adjustment structure 60.

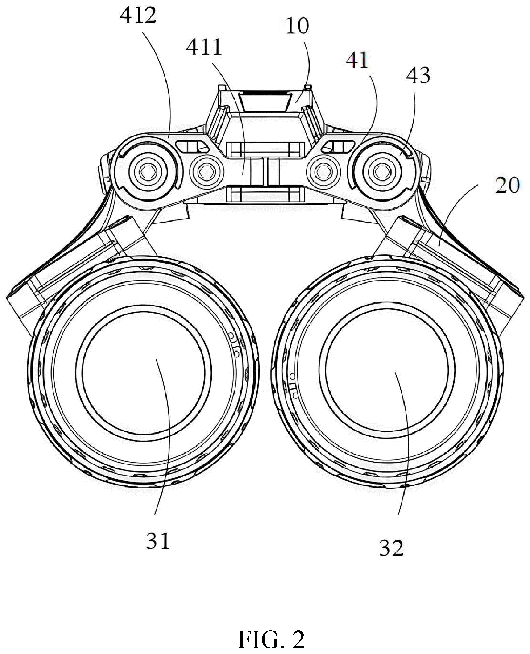

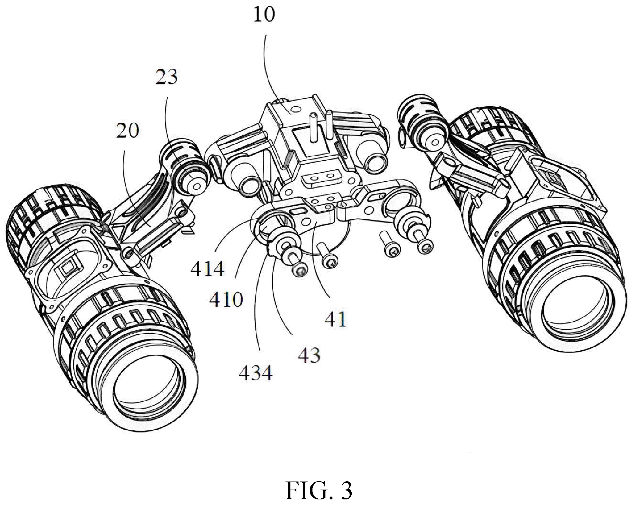

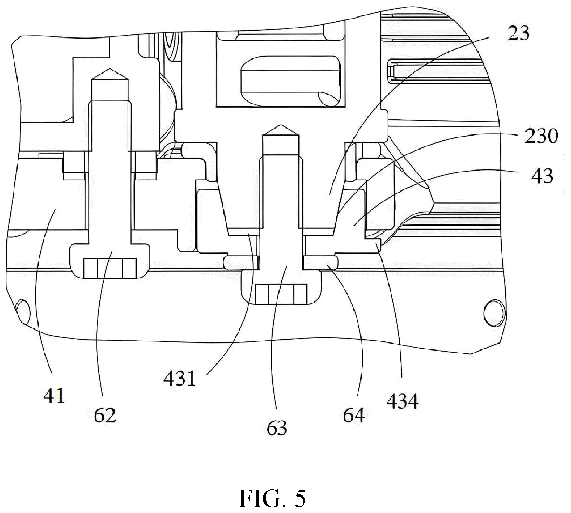

Referring to FIG. 2 to FIG. 5, the interpupillary distance adjustment structure 60 comprises: a bridge frame 10; a bridge connecting member 20 for rotatably connecting a lens barrel assembly 30 to the bridge frame 10, the bridge connecting member 20 being provided with an insertion portion 23; and an adjustment assembly 40 connected to the bridge frame 10, the adjustment assembly 40 comprising a sleeved portion 431 corresponding to the insertion portion 23, a mating surface between the insertion portion 23 and the sleeved portion 431 being an inclined surface. Under the action of a rotational external force, the bridge connecting member 20 rotates relative to the bridge frame 10 to adjust to a target interpupillary distance. After the external force is removed, the inclined surface provides a friction force along an axial direction and a friction force along a radial direction to maintain the target interpupillary distance.

The adjustment assembly 40 and the bridge connecting member 20 are connected to the bridge frame 10 through the mutual cooperation of the insertion portion 23 and the sleeved portion 431. Therefore, the arrangement of the insertion portion 23 and the sleeved portion 431 is not limited to that shown in the above embodiment. For example, in some other alternative embodiments, the positions of the insertion portion 23 and the sleeved portion 431 may be interchanged; that is, the insertion portion 23 may alternatively be formed on the adjustment assembly 40, and the sleeved portion 431 formed on the bridge connecting member 20. In this manner, one of the bridge connecting member 20 and the adjustment assembly 40 is provided with the insertion portion 23, and the other of the adjustment assembly 40 and the bridge connecting member 20 includes the sleeved portion 431 corresponding to the insertion portion 23, utilizing the mutual cooperation of the insertion portion 23 and the sleeved portion 431 to connect the adjustment assembly 40 to the bridge frame 10.

The bridge connecting member 20 rotatably connects the lens barrel assembly 30 to the bridge frame 10. During the process in which the interpupillary distance adjustment structure 60 performs adjustment of the interpupillary distance, the bridge connecting member 20 and the lens barrel assembly 30 together form a rotatable assembly relative to the bridge frame 10. It should be noted that the bridge connecting member 20 may be formed as an independent structural member, fixedly connected to the lens barrel assembly 30 to form an assembly, and then connected to the bridge frame 10 in the assembled state. In some other alternative embodiments, the bridge connecting member 20 and the lens barrel assembly 30 may be integrally formed, and the lens barrel assembly 30 integrally formed with the bridge connecting member 20 is rotatably connected to the bridge frame 10 via the bridge connecting member 20; alternatively, the bridge connecting member 20 and the bridge frame 10 may be integrally formed, with the bridge connecting member 20 formed as a relatively rotatable structural member on the bridge frame 10, and then connected to the lens barrel assembly 30.

The rotational external force refers to an externally applied force capable of causing the bridge connecting member 20 to rotate relative to the bridge frame 10. For example, a user may directly grip the lens barrel assembly 30 and flip it outwardly (in a direction in which the two lens barrel assemblies 30 move away from each other) or inwardly (in a direction in which the two lens barrel assemblies 31, 32 approach each other) to apply the rotational external force. The axial direction refers to the direction along a rotation axis of the relative rotation between the sleeved portion 431 and the insertion portion 23, and the radial direction refers to a direction perpendicular to the rotation axis. The inclined surface refers to a surface inclined at a certain angle relative to the rotation axis of the relative rotation between the sleeved portion 431 and the insertion portion 23.

The target interpupillary distance may refer to any interpupillary distance correspondingly formed at any position within the adjustment range of the relative rotation of the bridge connecting member 20 relative to the bridge frame 10.

In the interpupillary distance adjustment structure 60 provided in the above embodiment, through the arrangement of the bridge connecting member 20 and the adjustment assembly 40, the bridge connecting member 20 rotatably connects the lens barrel assembly 30 to the bridge frame 10, the adjustment assembly 40 is connected to the bridge frame 10, and the adjustment assembly 40 and the bridge connecting member 20 are respectively provided with the mutually cooperating insertion portion 23 and sleeved portion 431. By utilizing the arrangement that the mating surface between the insertion portion 23 and the sleeved portion 431 is an inclined surface, under the action of a rotational external force (such as directly gripping the lens barrel assemblies and rotating them in directions away from each other), the bridge connecting member 20 is capable of rotating relative to the bridge frame 10 to adjust the interpupillary distance, and after the adjustment is in place, upon removal of the external force, the inclined surface is capable of providing an axial friction force and a radial friction force to maintain the required interpupillary distance. In this manner, stepless adjustment of the interpupillary distance is achieved through end surface friction between the insertion portion 23 of the bridge connecting member 20 and the sleeved portion 431 of the adjustment assembly 40, which is not only simple to operate and more convenient for interpupillary distance adjustment, but also, in the absence of external force, the inclined surface can simultaneously provide component forces in both the axial and radial directions to maintain the target interpupillary distance, thereby exhibiting high stability.

Optionally, the adjustment assembly 40 includes a plate adapter 41 and a locking member 43. The plate adapter 41 includes a first connecting portion 411 connected to the bridge frame 10 and a second connecting portion 412 connected to the bridge connecting member 20. The locking member 43 is disposed on the plate adapter 41, and the sleeved portion 431 includes a mounting hole provided in the locking member 43, an inner surface of the mounting hole being a first inclined surface 230. The plate adapter 41 is connected to the bridge frame 10 via the first connecting portion 411 and to the bridge connecting member 20 via the second connecting portion 412. During the process in which the bridge connecting member 20 rotates relative to the bridge frame 10 under the action of a rotational external force to adjust the interpupillary distance, the rotational external force is relatively small at this time (e.g., smaller than the friction force of the mating surface between the insertion portion 23 and the sleeved portion 431). Due to the presence of the friction force on the mating surface between the insertion portion 23 and the locking member 43, the locking member 43 rotates relative to the plate adapter 41 along with the rotation of the bridge connecting member 20.

In an optional example, the locking member 43 is a conical cap made of a metal material to ensure the required strength. The inner surface of the mounting hole of the conical cap is a tapered surface, and the outer contour of the insertion portion 23 is tapered. Taking the side of the binocular observation device that is relatively close to the user's eyes in a use state as an observation side, and the side relatively farther from the user's eyes is defined asa lens side, in the present embodiment, the axial direction refers to the direction along a line connecting the observation side and the lens side. The outer contour dimension of the insertion portion 23 gradually increases from the observation side toward the lens side, and the diameter of the mounting hole also gradually increases from the observation side toward the lens side. The insertion portion 23 may be fitted into the mounting hole of the conical cap by an interference fit. It can be understood that, in an embodiment where the positions of the insertion portion 23 and the sleeved portion 431 are interchanged, the insertion portion 23 may be provided at an end of the adjustment assembly 40, and the bridge connecting member 20 may be provided with a mounting hole cooperating with the insertion portion 23. In such a case, the inclination direction of the mating surface between the insertion portion 23 and the mounting hole is opposite to that when the insertion portion 23 is provided on the bridge connecting member 20 and the sleeved portion 431 is provided on the adjustment assembly 40.

In some embodiments, the plate adapter 41 is provided with a receiving hole 410, and the locking member 43 is rotatably mounted in the receiving hole 410. The plate adapter 41 is provided with a rib 414 at an edge of the receiving hole 410 on a side close to the observation side. The locking member 43 includes a protrusion 434 corresponding to the rib 414. The protrusion 434 and the rib 414 are located on the same annular surface and are spaced apart from each other. During rotation of the bridge connecting member 20 relative to the bridge frame 10, the protrusion 434 rotates relative to the rib 414. The locking member 43 is mounted in the receiving hole 410, and an end thereof provided with the protrusion 434 protrudes outside the receiving hole 410, with the protrusion 434 flush with the rib 414 provided at an edge of the receiving hole 410 of the plate adapter 41. In this manner, during the process in which the bridge connecting member 20 rotates relative to the bridge frame 10 to adjust the interpupillary distance, the locking member 43 rotates in the receiving hole 410 along with the movement of the bridge connecting member 20, correspondingly forming a visual effect of the protrusion 434 rotating relative to the rib 414. In a use state of the binocular observation device, during the process in which the user grips the lens barrel assembly 30 and flips it outward (in a direction in which the two lens barrel assemblies 30 move away from each other) or inward (in a direction in which the two lens barrel assemblies 30 approach each other) to apply a rotational external force for adjusting the interpupillary distance, the angle of relative rotation of the protrusion 434 relative to the rib 414 can be directly observed, forming a visualized interpupillary distance adjustment effect, which is conducive to enhancing user experience and also conducive to simplifying user operation.

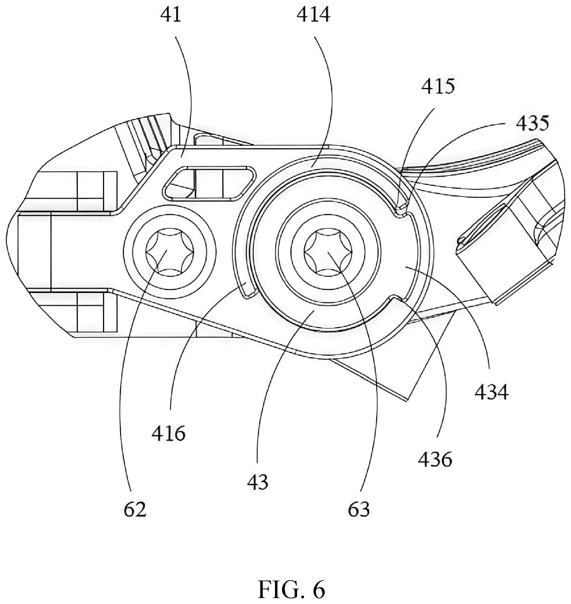

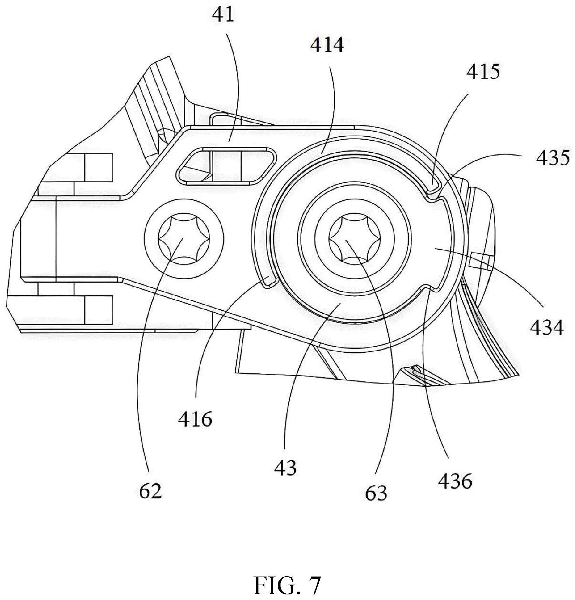

Optionally, referring to FIG. 6 and FIG. 7, the rib 414 is arc-shaped and includes a first end 415 and a second end 416. The protrusion 434 includes a first stop side 435 corresponding to the first end 415 and a second stop side 436 corresponding to the second end 416. During the process in which the protrusion 434 rotates relative to the rib 414, the first end 415 of the rib 414 abuts against the first stop side 435 and the second end 416 of the rib 414 abuts against the second stop side 436, respectively, to define a first-level interpupillary distance adjustment range. In one example, the abutment of the first end 415 of the rib 414 against the first stop side 435 may be taken as a starting position, and the abutment of the second end 416 of the rib 414 against the second stop side 436 may be taken as an ending position. Under a condition where the rotational external force is relatively small (e.g., smaller than the friction force of the mating surface between the insertion portion 23 and the sleeved portion 431), the stroke range within which the bridge connecting member 20 can be driven to rotate relative to the bridge frame 10 is correspondingly associated with the angular range within which the locking member 43 rotates along with the bridge connecting member 20 in the receiving hole 410. At this time, the stroke range within which the bridge connecting member 20 rotates relative to the bridge frame 10 is the first-level interpupillary distance adjustment range.

Optionally, in one example, the abutment of the first end 415 of the rib 414 against the first stop side 435 may be taken as the starting position, and at this position, the bridge connecting member 20 is in a folded state relative to the bridge frame 10, with the spacing between the left lens barrel assembly 31 and the right lens barrel assembly 32 at a minimum, that is, the interpupillary distance is at a minimum. When the binocular observation device needs to be used, the user may grip the lens barrel assembly 30 and flip it outward, thereby applying a rotational external force to the assembly of the lens barrel assembly 30 and the bridge connecting member 20. The bridge connecting member 20 rotates outward relative to the bridge frame 10 such that the spacing between the left lens barrel assembly 31 and the right lens barrel assembly 32 increases, that is, the interpupillary distance is adjusted. During this process, the locking member 43 rotates in the receiving hole 410 along with the bridge connecting member 20, and from the observation side, the rotation of the protrusion 434 relative to the rib 414 can be seen. When the bridge connecting member 20 rotates outward relative to the bridge frame 10 until the protrusion 434 rotates relative to the rib 414 to the ending position, that is, until the second end 416 of the rib 414 abuts against the second stop side 436, this corresponds to the maximum stroke range of outward rotation of the bridge connecting member 20 relative to the bridge frame 10. At this time, the spacing between the left lens barrel assembly 31 and the right lens barrel assembly 32 is at a maximum, that is, the interpupillary distance is at a maximum. It can be understood that the maximum interpupillary distance may be a value capable of accommodating human interpupillary distance variations. For example, the human interpupillary distance range may be 50 mm to 80 mm, and it may be designed such that when the bridge connecting member 20 rotates outward relative to the bridge frame 10 until the second end 416 of the rib 414 abuts against the second stop side 436, the corresponding maximum interpupillary distance can reach 90 mm. In this manner, the interpupillary distance support adjustment range can be adapted to any user, and the target interpupillary distance may be any value greater than the minimum interpupillary distance and less than the maximum interpupillary distance.

In some embodiments, during the process in which the protrusion 434 rotates relative to the rib 414, under a condition where the first end 415 of the rib 414 abuts against the first stop side 435 or the second end 416 abuts against the second stop side 436, when a relatively greater rotational external force is applied, the bridge connecting member 20 rotates relative to the bridge frame 10 to form a second-level interpupillary distance adjustment range. The second-level interpupillary distance adjustment range is smaller than the first-level interpupillary distance adjustment range. It can be understood that, during the process of adjusting the interpupillary distance within the first-level interpupillary distance adjustment range, the rotational external force causes the bridge connecting member 20 to rotate relative to the bridge frame 10, and at this time the rotational external force has not overcome the frictional force generated by the first inclined surface 230 between the insertion portion 231 of the bridge connecting member 20 and the locking member 43, so that the bridge connecting member 20 drives the locking member 43 to move together, and from the observation side what is seen is the protrusion 434 of the locking member 43 rotating relative to the rib 414 on the clamping plate connector 41. During the process of adjusting the interpupillary distance within the second-level interpupillary distance adjustment range, the rotational external force is relatively greater, and at this time the rotational external force needs to overcome the frictional force generated by the first inclined surface 230 between the insertion portion 231 of the bridge connecting member 20 and the locking member 43, and from the observation side what is seen is that the protrusion 434 of the locking member 43 remains abutted against the rib 414 and no longer rotates, while the bridge connecting member 20 rotates relative to the bridge frame 10 to change the interpupillary distance (which also corresponds to changing the interpupillary distance corresponding to the abutment of the protrusion 434 against the rib 414 during subsequent adjustment within the first-level interpupillary distance adjustment range), and during this process relative motion occurs between the insertion portion 231 of the bridge connecting member 20 and the locking member 43.

In this embodiment, the abutment of the first end 415 of the rib 414 against the first stop side 435 is set as the starting position. When the bridge connecting member 20 rotates outward relative to the bridge frame 10 until the protrusion 434 rotates relative to the rib 414 such that the second end 416 of the rib 414 abuts against the second stop side 436, the corresponding maximum interpupillary distance is a value that accommodates human interpupillary distance variations. This is to ensure that the binocular observation device can be adapted to any user. However, when the binocular observation device belongs to a specific user, the most suitable interpupillary distance f or that user is a determined value smaller than the maximum interpupillary distance. For the determined value of the most suitable interpupillary distance of a specific user, the adjustment operation provided by the second-level interpupillary distance adjustment range of the present embodiment may be employed, such that the interpupillary distance corresponding to the state in which the protrusion 434 abuts against one end of the rib 414 is the determined value.

Under a condition where the first end 415 of the rib 414 abuts against the first stop side 435 or the second end 416 abuts against the second stop side 436, when a relatively greater rotational external force is applied, a further greater rotational external force at this time can overcome the radial frictional force of the mating surface between the insertion portion 23 and the sleeved portion 431. Since the protrusion 434 of the locking member 43 is stopped by the rib 414 at this time, the locking member 43 is enabled to rotate relative to the insertion portion 23. Referring to FIG. 6, under a condition where the first end 415 of the rib 414 abuts against the first stop side 435, when a relatively greater rotational external force is applied, the angle of the bridge connecting member 20 relative to the bridge frame 10 will change, as shown in FIG. 7. In this manner, the interpupillary distance corresponding to the abutment of the first end 415 of the rib 414 against the first stop side 435 can be changed. Similarly, by maintaining a condition where the second end 416 of the rib 414 abuts against the second stop side 436 and applying a relatively greater rotational external force, the interpupillary distance corresponding to the abutment of the second end 416 of the rib 414 against the second stop side 436 can also be changed. That is, through adjustment by applying a relatively greater rotational external force under a condition where the first end 415 of the rib 414 abuts against the first stop side 435 or the second end 416 abuts against the second stop side 436, the state in which the abutment of the first end 415 of the rib 414 against the first stop side 435 no longer corresponds to the minimum interpupillary distance can be changed, and the magnitude of the maximum interpupillary distance corresponding to the abutment of the second end 416 of the rib 414 against the second stop side 436 can also be changed. When the binocular observation device is in use, interpupillary distance adjustment always proceeds from the folded state to the target interpupillary distance most suitable for the user. Therefore, for a specific user, by applying a relatively larger rotational external force under the condition where the first end 415 of the rib 414 abuts against the first stop side 435 or the second end 416 abuts against the second stop side 436, the magnitude of the maximum interpupillary distance corresponding to the abutment of the second end 416 of the rib 414 against the second stop side 436 can be changed, thereby forming a second-level interpupillary distance adjustment range. As a result, after the user performs one adjustment, in subsequent use, only a relatively small rotational external force is needed to grip the lens barrel assembly 30 and flip it outward, applying a rotational external force to the combined body of the lens barrel assembly 30 and the bridge connecting member 20, so that the bridge connecting member 20 rotates outward relative to the bridge frame 10 to cause the second end 416 of the rib 414 to abut against the second stop side 436, thereby obtaining the most suitable target interpupillary distance. Thus, for a specific user, after performing one adjustment according to the most suitable target interpupillary distance, interpupillary distance adjustment can be easily and simply completed in subsequent use.

Optionally, the first connecting portion 411 includes a first connecting hole and a second connecting hole disposed on different sides. A first fastener 61 passes through the bridge frame 10 and is connected to the first connecting hole, and a second fastener 62 passes through the second connecting hole and is connected to the bridge frame 10, thereby connecting the plate adapter 41 to the bridge frame 10. The number of the first connecting holes and the first fasteners 61 may each be one or more. In the present embodiment, the first connecting holes and the first fasteners 61 are two in number respectively, and the first fasteners are fixing pins 611. The number of the second connecting holes and the second fasteners 62 may each be one or more. In the present embodiment, the first connecting holes and the first fasteners 61 are two in number respectively, and the second fasteners 62 are fastening screws 621. The first fasteners 61 and the second fasteners 62 connect the plate adapter 41 to the bridge frame 10 from different sides of the bridge frame 10, maintaining connection stability. Optionally, a threaded sleeve or a heat staking nut is provided at a position on the bridge frame 10 for connection with the second fastener 62, to ensure strength and further ensure connection stability.

In some embodiments, the receiving hole 410 is disposed at a position of the second connecting portion 412 of the plate adapter 41, the locking member 43 is rotatably mounted in the receiving hole 410. The third fastener 63 passes through the locking member 43 and is connected to the bridge connecting member 20, thereby connecting the plate adapter 41 to the bridge connecting member 20. In the present embodiment, the third fastener 63 is likewise a fastening screw 621. The direction in which the third fastener 63 connects the plate adapter 41 to the bridge connecting member 20 is the same as the direction in which the second fastener 62 connects the plate adapter 41 to the bridge frame 10. Optionally, a threaded sleeve or a heat staking nut is provided at a position on the bridge connecting member 20 for connection with the third fastener 63, to ensure strength and further ensure connection stability. Optionally, a washer 64 is disposed between an end face of the third fastener 63 and an end face of the locking member 43 abutting against each other. An outer diameter of the washer 64 is greater than an outer diameter of an end portion of the third fastener 63. The washer 64 is made of metal material to ensure its strength. The outer diameter of the washer 64 is set to be greater than the outer diameter of the end portion of the third fastener 63, which can increase a contact area between the third fastener 63 and the locking member 43, and can disperse pressure applied by the third fastener 63 to the locking member 43 during connection, thereby protecting the locking member 43 to avoid wear.

Optionally, the bridge connecting member 20 includes a left bridge connecting member and a right bridge connecting member corresponding to the left lens barrel assembly 31 and the right lens barrel assembly 32 respectively, and the plate adapter 41 includes a left plate adapter and a right plate adapter corresponding to the left bridge connecting member and the right bridge connecting member respectively. A side of each of the left plate adapter and the right plate adapter abutting against an end face of the bridge frame 10 is provided with a groove and a back-up spring washer 65 fitted in the groove. In the present embodiment, the binocular observation device has a symmetrical structure. The bridge connecting members 20 and the plate adapters 41 are each arranged in a one-to-one correspondence with the lens barrel assemblies 30. During the interpupillary distance adjustment process, the adjustment of the left lens barrel assembly 31 rotating relative to the bridge frame 10 through the left bridge connecting member and the adjustment of the right lens barrel assembly 32 rotating relative to the bridge frame 10 through the right bridge connecting member may be independent of each other. That is, a first angle through which the left lens barrel assembly 31 rotates relative to the bridge frame 10 via the left bridge connecting member and a second angle through which the right lens barrel assembly 32 rotates relative to the bridge frame 10 via the right bridge connecting member may be the same or different.

In order to provide a more comprehensive understanding of the interpupillary distance adjustment performed by the interpupillary distance adjustment structure 60 according to the embodiments of the present application, the key structures and principles of interpupillary distance adjustment are described below taking the right eye as an example.

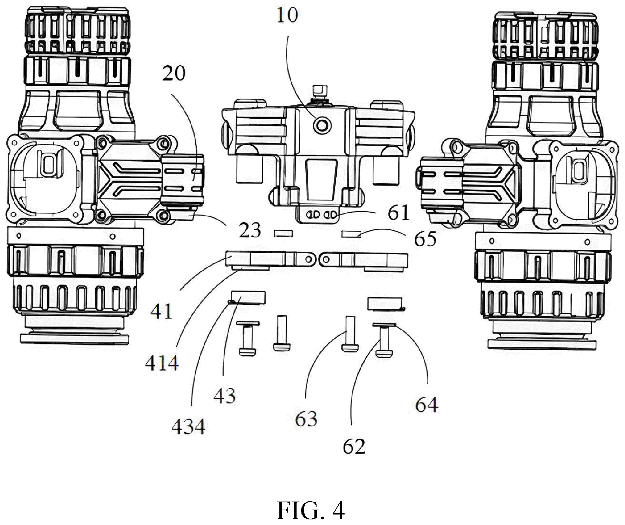

As shown in FIG. 4, the right bridge connecting member and the locking member 43 on the right plate adapter contact each other through an inclined mating surface, namely the first inclined surface 230. The rib 414 disposed at the edge of the receiving hole 410 on the right plate adapter is flush with the protrusion 434 on the locking member 43, and both are disposed on the observation side of the bridge frame 10 relatively close to the human eye. The third fastener 63 presses the right bridge connecting member against the locking member 43, so that the mating surfaces between the insertion portion 23 of the right bridge connecting member and the locking member 43 maintains close contact. Magnitude of a locking force of the third fastener 63 can adjust the contact area of the mating surface, thereby adjusting magnitude of the axial frictional force and radial frictional force generated by the mating surface. The frictional force generated by the first inclined surface 230 maintains the required interpupillary distance, and a relative rotation range of the rib 414 and the protrusion 434 can achieve the intended physical limiting purpose.

The interpupillary distance adjustment is as follows:
Step 1, when an assembly of the right lens barrel assembly 32 and the right bridge connecting member is rotated, friction is generated between an inclined surface of the right bridge connecting member and an inclined surface of the locking member 43, and the right bridge connecting member drives the corresponding locking member 43 to rotate. When the protrusion 434 of the locking member 43 contacts the rib 414 of the right plate adapter, the first-level interpupillary distance adjustment range is achieved. The frictional force generated during this period is defined as a first-level frictional force, and the right bridge connecting member can be maintained at any position relative to the bridge frame 10, thereby achieving the objective of obtaining the target interpupillary distance.
Step 2, the contact between a tapered surface of the insertion portion 23 of the right bridge connecting member and the locking member 43 through the first inclined surface 230 is a tapered surface contact. After reaching the physical limit position angle at which the rib 414 and the protrusion 434 abut (as shown in FIG. 6), a greater force is applied to the assembly of the right lens barrel assembly 32 and the right bridge connecting member. This is defined as a second-level frictional force at this time. This force enables the tapered surface of the insertion portion 23 of the right bridge connecting member to overcome the first-level frictional force between the mating surface of the first inclined surface 230 and the locking member 43 to rotate, while driving the assembly of the right lens barrel assembly 32 and the right bridge connecting member to rotate (as shown in FIG. 7). In this step, the angle of the right bridge connecting member relative to the bridge frame 10 corresponding to the abutment of the rib 414 and the protrusion 434 can be changed, thereby enabling the interpupillary distance corresponding to the abutment of the rib 414 and the protrusion 434 to be adjusted to be equal to the target interpupillary distance required by the specific user.
Step 3, during the process of adjusting the frictional force, the interpupillary distance adjustment structure 60 formed by the rib 414 and the protrusion 434 is visualizable, such that the amount of interpupillary distance adjustment during the first-level frictional force adjustment of the interpupillary distance can be observed, and thus the same angular amount is rotated when overcoming the first-level frictional force rotation. After the adjustment of step 2, at this time, when the assembly of the right lens barrel assembly 32 and the right bridge connecting member is rotated with a slight and comfortable force to the physical limit position (when the protrusion 434 of the locking member 43 contacts the rib 414 of the right plate adapter), the interpupillary distance at this time is exactly suitable for this person's interpupillary distance.

For a specific user, during each subsequent use, it is only necessary to adjust to the physical limit position at which the rib 414 and the protrusion 434 abut against each other with a slight and comfortable force, without needing to rotate the bridge connecting member 20 relative to the bridge frame 10 inward to the folded position during use. In a specific example, the rib 414 and the protrusion 434 are arranged such that, in one abutting state corresponding to the bridge connecting member 20 being rotated inward relative to the bridge frame 10 to the folded position, this serves as a maximum physical limit position of relative rotation between the rib 414 and the protrusion 434; and in another abutting state corresponding to the bridge connecting member 20 being rotated outward relative to the bridge frame 10 to an interpupillary distance exactly suitable for the current user, this serves as a minimum physical limit position of relative rotation between the rib 414 and the protrusion 434, thereby avoiding the time required for adjusting the interpupillary distance and simplifying the adjustment process.

When the binocular observation device is used by a different user, during interpupillary distance adjustment, the adjustment may be performed in accordance with step 2, such that the tapered surface of the insertion portion 23 of the right bridge connecting member overcomes the first-level frictional force between the mating surfaces of the first inclined surface 230 and the locking member 43 to rotate, thereby re-adjusting the physical limit position corresponding to the abutment of the rib 414 and the protrusion 434.

In summary, the interpupillary distance adjustment structure 60 provided by the embodiments of the present application has at least the following characteristics:

First, the structure is simple, convenient to assemble, and stable and reliable.

Second, the interpupillary distance adjustment operation is visualizable and simple to operate.

Third, it can be adjusted to adapt to the interpupillary distances of different users, obtaining a target interpupillary distance adapted to each individual user.

Fourth, for a specific user, by performing one adjustment to overcome the first-level frictional force, the physical limit position corresponding to the rotation of the bridge connecting member 20 relative to the bridge frame 10 when the rib 414 and the protrusion 434 abut can be changed, such that the same user can easily and simply achieve the most suitable interpupillary distance position by adjusting the abutment of the rib 414 and the protrusion 434 during subsequent use.

It should be noted that, in the binocular observation device, the left lens barrel assembly 31 and the right lens barrel assembly 32 may each be a single lens barrel or dual lens barrels. That is, the binocular observation device may also refer to a multi-ocular observation device in which the left lens barrel assembly 31 and the right lens barrel assembly 32 are each dual lens barrels or other multiple lens barrels.

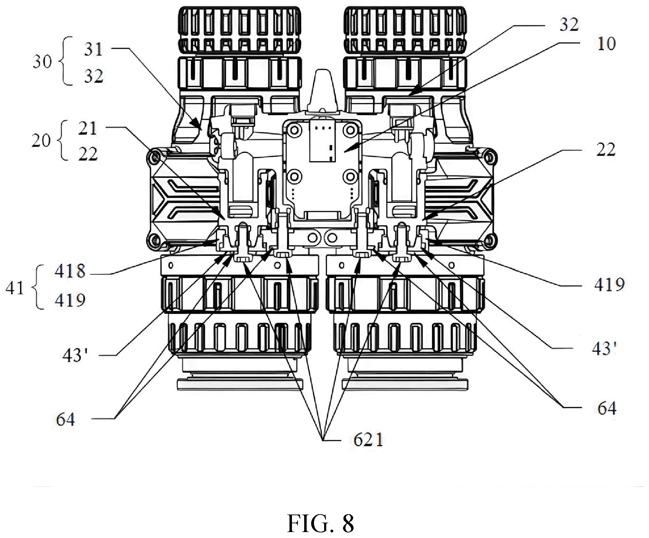

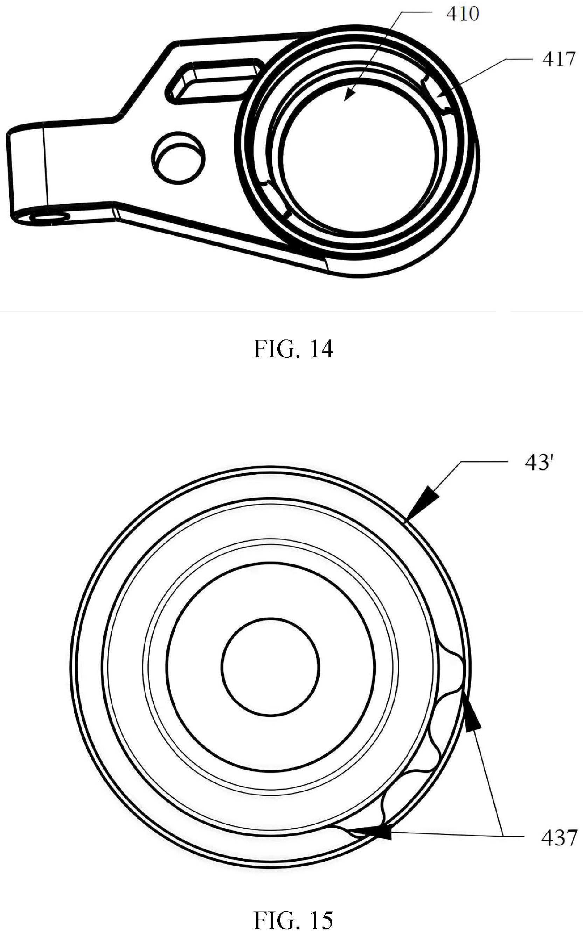

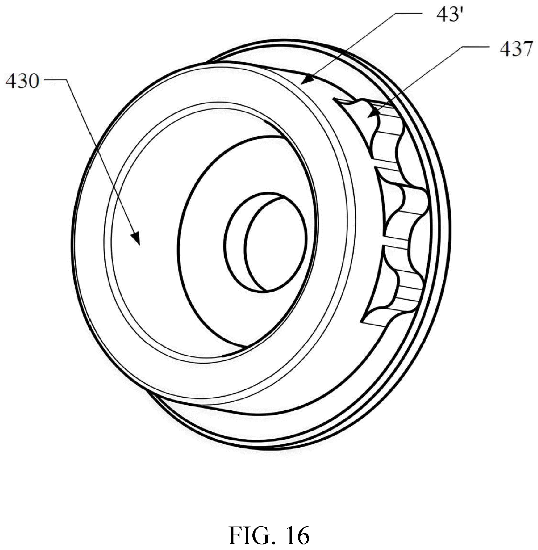

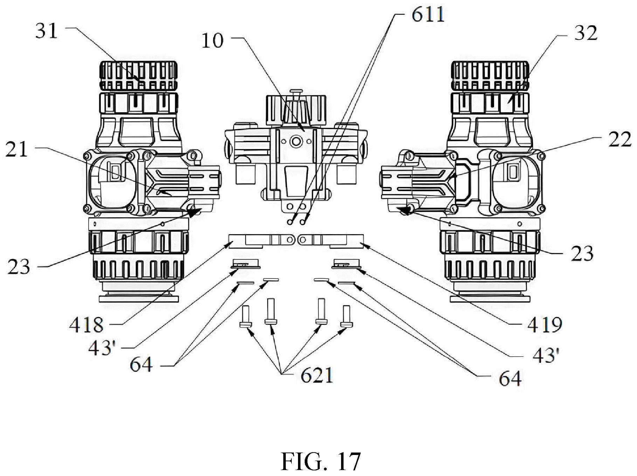

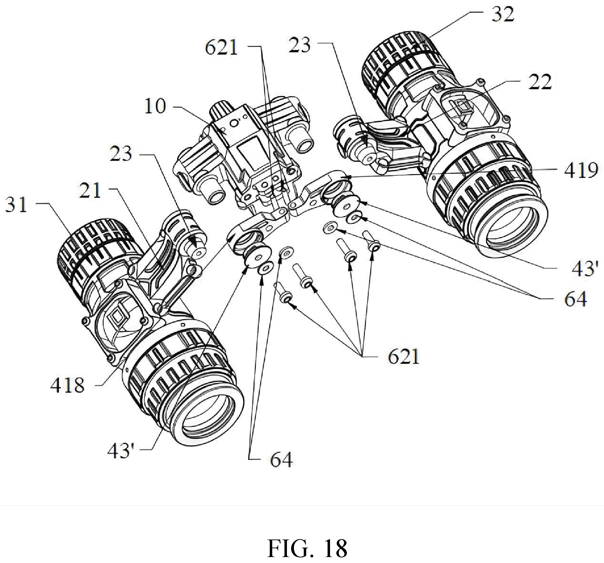

Furthermore, in the interpupillary distance adjustment structure 60, the adjustment assembly 40 may also employ a hidden limiting structure to achieve adjustment of the interpupillary distance size. Referring to FIG. 8 to FIG. 18, a multi-ocular observation device provided according to another embodiment of the present application is shown. The main difference from the above embodiment is that: the locking member 43 is formed as a rotary adjustment member 43', the adjustment assembly 40 is a limiting adjustment assembly 40' including the rotary adjustment member 43', and the hidden limiting structure is formed between the rotary adjustment member 43' and the plate adapter 41.

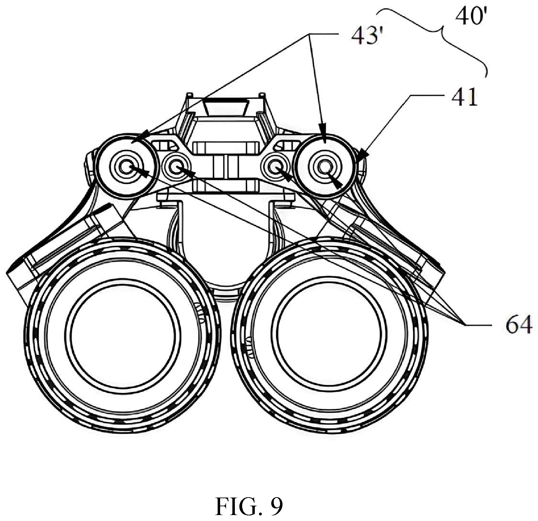

Referring also to FIG. 9 to FIG. 11, the limiting adjustment assembly 40' comprises the plate adapter 41 and the rotary adjustment member 43'. The plate adapter 41 connects the bridge connecting member 20 to the bridge frame 10. The plate adapter 41 is provided with the receiving hole 410. The rotary adjustment member 43' is rotatably sleeved on the insertion portion 23. A mating surface between the rotary adjustment member 43' and the insertion portion 23 includes an inclined surface. The rotary adjustment member 43' is rotatably mounted in the receiving hole 410. A limiting structure is provided between an inner circumferential surface of the receiving hole 410 and an outer circumferential surface of the rotary adjustment member 43', the limiting structure being configured to limit a rotational limit range of the rotary adjustment member 43' within the receiving hole 410.

The rotary adjustment member 43' is rotatably mounted in the receiving hole 410 of the plate adapter 41, and is rotatably connected relative to the insertion portion 23 of the bridge connecting member 20. The plate adapter 41 connects the bridge connecting member 20 to the bridge frame 10. In this manner, by utilizing the plate adapter 41 and the rotary adjustment member 43', relative rotatable adjustment between the bridge connecting member 20 and the bridge frame 10 can be formed under conditions of rotational external forces of different magnitudes.

The axial direction refers to the direction along the rotation axis of the relative rotation between the rotary adjustment member 43' and the insertion portion 23, and the radial direction refers to a direction perpendicular to said rotation axis. The inclined surface refers to a surface inclined at a certain angle relative to the rotation axis of the relative rotation between the rotary adjustment member 43' and the insertion portion 23.

In the above embodiment, by utilizing the arrangement in which the rotary adjustment member 43' and the insertion portion 23 are relatively rotatable and the mating surface is an inclined surface, and by utilizing the arrangement in which the rotary adjustment member 43' and the plate adapter 41 are relatively rotatable and the limiting structure can limit the rotational limit range, under the action of rotational external forces of different magnitudes (such as directly gripping the lens barrel assemblies and rotating them in directions away from each other), the bridge connecting member 20 can rotate relative to the bridge frame 10 based on the relative rotatability between the rotary adjustment member 43' and the plate adapter 41, to adjust the interpupillary distance within a certain range. Based on the relative rotatability between the rotary adjustment member 43' and the insertion portion 23, the rotational limit range can be changed, thereby enabling the range of interpupillary distance adjustment to be changed. After the adjustment is in place, upon removal of the external force, the inclined surface between the rotary adjustment member 43' and the insertion portion 23 is capable of providing axial frictional force and radial frictional force to maintain the interpupillary distance at the desired magnitude. In this manner, the operation is not only simple and the interpupillary distance adjustment more convenient, but the target interpupillary distance is directly maintained by the inclined surface with high stability. Moreover, the hidden limiting structure between the rotary adjustment member 43' and the receiving hole 410 supports the corresponding setting of the rotational limit range based on the interpupillary distance of different individual users. After one user completes the adjustment, that user can easily and simply reach the interpupillary distance position during subsequent use.

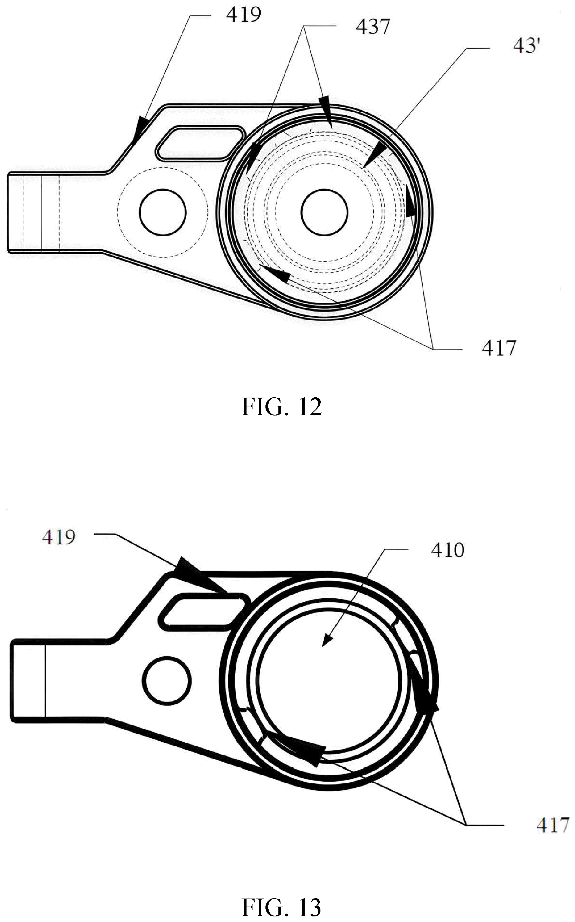

Referring also to FIG. 12 to FIG. 18, in some embodiments, the limiting structure comprises a first limiting structure 417 disposed on the inner circumferential surface of the receiving hole 410, and a second limiting structure 437 disposed on the outer circumferential surface of the rotary adjustment member 43'. During the rotation of the rotary adjustment member 43' within the receiving hole 410, the abutment of the second limiting structure 437 against one side of the first limiting structure 417 serves as a first rotational limit position, and the abutment of the second limiting structure 437 against the other side of the first limiting structure 417 serves as a second rotational limit position. In this manner, the limiting structure is formed as a hidden limiting structure. Normally, in the non-use state, the lens barrel assembly 30 is in a folded state (as shown in FIG. 9). At this time, the second limiting structure 437 on the rotary adjustment member 43' may be in a position abutting against one side of the first limiting structure 417, or may be in a position somewhere between the two sides of the first limiting structure 417. During the process of the interpupillary distance adjustment, when the user grips the lens barrel and applies a rotational external force, the adjustment can be regarded as being in place when the second limiting structure 437 rotates to abut against the other side of the first limiting structure 417. The operation is simple, and large-angle flip adjustment is supported.

It should be noted that the first limiting structure 417 and the second limiting structure 437 are spaced apart from each other and located on the same annular line. The respective shapes and dimensions thereof are not limited, provided that the rotation range of the rotary adjustment member 43' within the receiving hole 410 of the plate adapter 41 can satisfy the range of relative rotation of the lens barrel assembly 30 relative to the bridge frame 10.

In some embodiments, when a first rotational external force is applied to the bridge connecting member 20, the rotary adjustment member 43' rotates relative to the receiving hole 410, and the rotation of the second limiting structure 437 between the first rotational limit position and the second rotational limit position forms a first-level interpupillary distance adjustment range. When the second limiting structure 437 is at the first rotational limit position and/or the second rotational limit position, and when a second rotational external force greater than the first rotational external force is applied to the bridge connecting member 20, the rotary adjustment member 43' rotates relative to the insertion portion 23 to form a second-level interpupillary distance adjustment range. At this time, the relative position between the second limiting structure 437 and the first limiting structure 417 changes. The interpupillary distance adjustment range is related to the range of rotation of the lens barrel assembly 30 following the bridge connecting member 20 relative to the bridge frame 10. The spacing between the first limiting structure 417 and the second limiting structure 437 may be designed such that the rotation range of the second limiting structure 437 between the first rotational limit position and the second rotational limit position can correspond to the maximum stroke range of the lens barrel assembly 30 following the bridge connecting member 20 rotating outwardly relative to the bridge frame 10. It should be understood that the maximum interpupillary distance may be a value capable of accommodating human interpupillary distance variations. For example, the human interpupillary distance range may be 50 mm-80 mm, and it may be designed such that when the bridge connecting member 20 rotates outwardly relative to the bridge frame 10 and the second limiting structure 437 abuts against the respective opposite sides of the first limiting structure 417, the corresponding maximum interpupillary distance can reach 90 mm. In this manner, the adjustable range of the interpupillary distance can be adapted to any user, and the target interpupillary distance may be any value between the minimum interpupillary distance and the maximum interpupillary distance.

In one example, the abutment of the second limiting structure 437 against one side of the first limiting structure 417 may be set as the starting position, and it may be set that at this time the bridge connecting member 20 is in a folded state relative to the bridge frame 10, and the lens barrel assembly 30 is in a folded state. When a relatively small rotational external force is applied to the bridge connecting member 20 (for example, less than the frictional force of the mating surface between the rotary adjustment member 43' and the insertion portion 23), the stroke range capable of driving the bridge connecting member 20 to rotate relative to the bridge frame 10 is correspondingly associated with the rotation angle range of the rotary adjustment member 43' within the receiving hole 410. At this time, the stroke range of the bridge connecting member 20 rotating relative to the bridge frame 10 is the first-level interpupillary distance adjustment range. Within the first-level interpupillary distance adjustment range, the abutment of the second limiting structure 437 against the other side of the first limiting structure 417 may be taken as the ending position, and the lens barrel assembly 30 is in an unfolded use state. If, for a specific user, the user's interpupillary distance corresponds exactly to the rotation angle when the second limiting structure 437 rotates from abutting against one side of the first limiting structure 417 to abutting against the other side of the first limiting structure 417, then each time this user uses the device, the user only needs to apply a relatively small rotational external force to the bridge connecting member 20, flip the lens barrel until feeling the abutment force of the second limiting structure 437 against the first limiting structure 417, and the interpupillary distance adjustment is complete.

For another user, if the user's interpupillary distance is relatively small, the second limiting structure 437 may be maintained abutting against one side of the first limiting structure 417, and a relatively larger rotational external force is applied to the bridge connecting member 20 (for example, greater than the frictional force of the mating surface between the rotary adjustment member 43' and the insertion portion). At this time, the rotary adjustment member 43' rotates relative to the insertion portion 23, and the stroke range of the bridge connecting member 20 rotating relative to the bridge frame 10 is a second-level interpupillary distance adjustment range. Within the second-level interpupillary distance adjustment range, the relative position between the second limiting structure 437 of the rotary adjustment member 43' and the first limiting structure 417 within the receiving hole 410 is changed. After performing the second-level interpupillary distance adjustment, this is equivalent to changing the initial position of the rotary adjustment member 43' within the receiving hole 410 when the lens barrel assembly 30 is in the folded state. That is, the adjustment causes the second limiting structure 437 to be located at an intermediate position within the spacing between the two sides of the first limiting structure 417 when the lens barrel assembly 30 is in the folded state. Thereafter, the rotation angle range of the rotary adjustment member 43' within the receiving hole 410 is correspondingly associated with the rotation of the second limiting structure 437 from this intermediate position to abutting against the other side of the first limiting structure 417. For example, after the second-level interpupillary distance adjustment, the initial position of the rotary adjustment member 43' within the receiving hole 410 may be changed, such that when the lens barrel assembly 30 is in the folded state, the second limiting structure 437 is located at an intermediate position within the spacing between the two sides of the first limiting structure 417, and when the bridge connecting member 20 is rotated to cause the second limiting structure 437 to rotate from this intermediate position to abutting against the other side of the first limiting structure 417, the corresponding maximum interpupillary distance can reach 75 mm. During each subsequent use, the user only needs to apply a relatively small rotational external force to the bridge connecting member 20, flipping the lens barrel assembly 30 from the retracted state until feeling the abutting force of the second limiting structure 437 against the first limiting structure 417 to complete the interpupillary distance adjustment.

In some embodiments, the outer contour of the insertion portion 23 is tapered. The rotary adjustment member 43' is provided internally with a fitting hole, and an inner surface of the fitting hole is a second inclined surface 430. Specifically, the second inclined surface 430 is a tapered surface matching the insertion portion 23. Under the action of the first rotational external force, the rotary adjustment member 43' rotates within the receiving hole 410 to adjust to a target interpupillary distance within the first-level interpupillary distance adjustment range. Upon removal of the first rotational external force, the tapered surface between the insertion portion 23 and the rotary adjustment member 43' provides an axial friction force and a radial friction force to maintain the target interpupillary distance. Under the action of the second rotational external force, the rotary adjustment member 43' overcomes the axial friction force and the radial friction force to rotate relative to the insertion portion 23, and the position of the first rotational limit position and/or the second rotational limit position changes, correspondingly causing the first-level interpupillary distance adjustment range to change. In an optional example, the rotary adjustment member 43' is a conical cap made of metal material to ensure the required strength. The outer contour of the insertion portion 23 is tapered, and the inner surface of the mounting hole of the conical cap is a tapered surface matching the outer contour of the insertion portion 23. The target interpupillary distance may refer to any interpupillary distance formed at any position within the adjustment range of the rotation of the bridge connecting member 20 relative to the bridge frame 10. In the embodiments of the present application, the target interpupillary distance is the interpupillary distance corresponding to the first-level interpupillary distance adjustment range.

Taking the side of the multi-ocular observation device relatively close to the user's eyes in the use state as the observation side, and the side relatively far from the user's eyes as the lens side, in the present embodiment, the axial direction refers to the direction of the line connecting the observation side and the lens side. The outer contour dimension of the insertion portion 23 gradually increases from the observation side toward the lens side, and the diameter of the mounting hole likewise gradually increases from the observation side toward the lens side. The insertion portion 23 may be interference-fitted into the mounting hole of the conical cap. The arrangement in which the mating surface between the rotary adjustment member 43' and the insertion portion 23 is formed as a tapered surface, enables, the bridge connecting member 20 to rotate relative to the bridge frame 10 to adjust the interpupillary distance under the action of a rotational external force (such as directly gripping the lens barrel assemblies and rotating them in directions away from each other). After the adjustment is in place, upon removal of the external force, the tapered surface is capable of providing an axial friction force and a radial friction force to maintain the required interpupillary distance. In this manner, stepless adjustment of the interpupillary distance is achieved by frictional engagement between the mating surfaces of the insertion portion 23 of the bridge connecting member 20 and the rotary adjustment member 43', which is not only simple to operate and more convenient for interpupillary distance adjustment, but also, in the absence of external force, the tapered surface can simultaneously provide component forces in both the axial and radial directions to maintain the target interpupillary distance, resulting in high stability.

In some embodiments, the first limiting structure 417 comprises a first limiting rib disposed on the inner circumferential surface of the receiving hole 410. The second limiting structure 437 comprises a second limiting rib disposed on the outer circumferential surface of the rotary adjustment member 43'. The first limiting structure 417 and the second limiting structure 437 are formed as ribs located on the same annular surface and spaced apart from each other, facilitating the setting of the maximum range of interpupillary distance adjustment by configuring the shapes and dimensions of the ribs.

In an optional example, the first limiting structure 417 comprises two protruding portions spaced apart along the circumferential direction of the receiving hole 410; and/or, the second limiting structure 437 comprises an arc-shaped protrusion extending along the circumferential direction of the rotary adjustment member 43' for a certain length. The abutment of the arc-shaped protrusion against one of the protruding portions serves as the first rotational limit position, and the abutment of the protrusion against the other protruding portion serves as the second rotational limit position. The first limiting structure 417 employs two protruding portions spaced apart, which may be symmetrically disposed, facilitating simplification of the assembly operation of mounting the rotary adjustment member 43' in the receiving hole 410 of the plate adapter 41, and reducing the assembly precision requirements for the rotary adjustment member 43'. The second limiting structure 437 employs a continuous arc-shaped protrusion, and the number of the arc-shaped protrusions can be utilized to adjust and obtain the second limiting structure 437 of a required length, so as to design the maximum rotation angle of the rotary adjustment member 43' within the receiving hole 410, correspondingly adjust the range of rotation of the bridge connecting member 20 relative to the bridge frame 10, thereby correspondingly adjusting and obtaining the required interpupillary distance.

In order to provide a more comprehensive understanding of the interpupillary distance adjustment performed by the interpupillary distance adjustment structure according to the embodiments of the present application, the key structures and principles of interpupillary distance adjustment are described below taking the right eye as an example.

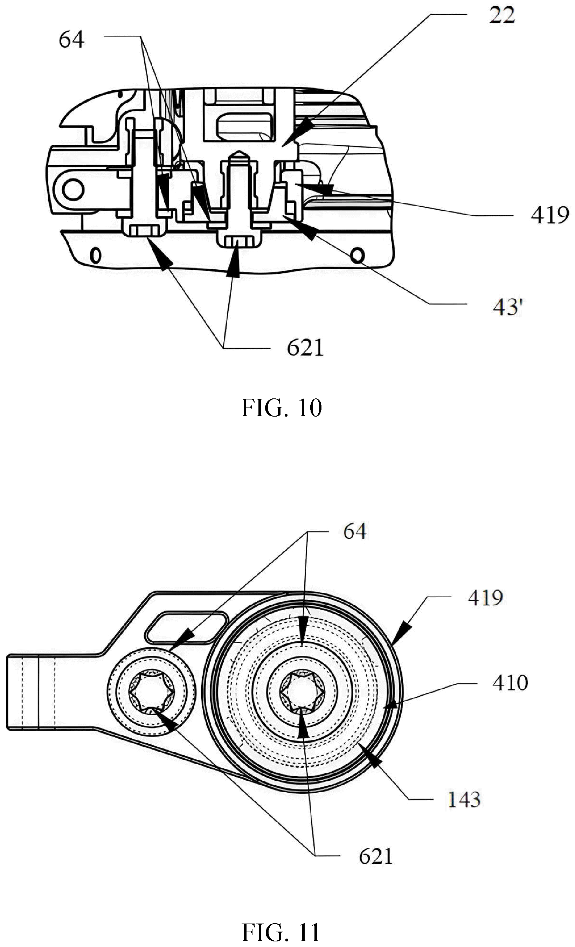

As shown in FIG. 11, the rotary adjustment member 43' is mounted in the receiving hole 410 of the right plate adapter 419, and is sleeved on the outer periphery of the insertion portion 23 of the right bridge connecting member 22. The mating surface between the rotary adjustment member 43' and the insertion portion 23 is a tapered surface. The third fastener presses the right bridge connecting member 22 against the rotary adjustment member 43', so that the insertion portion 23 of the right bridge connecting member 22 and the rotary adjustment member 43' maintain close contact through the mating surface. The magnitude of the locking force of the third fastener can adjust the contact area of the mating surface, thereby adjusting the magnitude of the axial frictional force and radial frictional force generated by the mating surface, so as to maintain the interpupillary distance at a desired magnitude. It can also support relative rotation of the rotary adjustment member 43' relative to the insertion portion 23 under a preset external force condition, thereby facilitating the design and implementation of one interpupillary distance adjustment range. The arrangement of the hidden limiting structure between the rotary adjustment member 43' and the inner circumferential surface of the receiving hole 410 can support relative rotation of the rotary adjustment member 43' within a certain range in the receiving hole 410, facilitating the design and implementation of another interpupillary distance adjustment range.

The interpupillary distance adjustment is as follows:
Step 1, when a first rotational external force is applied to rotate the assembly of the right lens barrel assembly 32 and the right bridge connecting member 22, at this time, due to the frictional force of the mating surface between the right bridge connecting member 22 and the rotary adjustment member 43', the right bridge connecting member 22 drives the corresponding rotary adjustment member 43' to rotate in the receiving hole 410 until the second limiting structure 437 of the rotary adjustment member 43' abuts against the first limiting structure 417 of the right plate adapter 419, achieving the first-level interpupillary distance adjustment range. During this period, the frictional force generated between the insertion portion 23 of the right bridge connecting member 22 and the rotary adjustment member 43' is defined as a first-level frictional force. The rotation of the right bridge connecting member 22 relative to the bridge frame 10 can be arrested at each position, achieving the purpose of obtaining the target interpupillary distance.
Step 2, the mating surface between the insertion portion 23 of the right bridge connecting member 22 and the rotary adjustment member 43' is a tapered surface contact. Under the first rotational external force, after reaching the physical limit position at which the second limiting structure 437 and the first limiting structure 417 abut against each other, a greater rotational external force is further applied to the assembly of the right lens barrel assembly 32 and the right bridge connecting member 22, referred to as a second rotational external force. At this time, the second rotational external force can overcome the first-level frictional force between the mating surface of the rotary adjustment member 43' and the insertion portion 23 to cause it to rotate, while driving the assembly of the right lens barrel assembly 32 and the right bridge connecting member 22 to rotate. In this step, the initial relative position between the second limiting structure 437 and the first limiting structure 417 can be changed, so that when the second limiting structure 437 of the rotary adjustment member 43' abuts against the first limiting structure 417 of the right plate adapter 419, the corresponding angle of the right bridge connecting member 22 relative to the bridge frame 10 can be changed, thereby adjusting the interpupillary distance corresponding to the abutment of the second limiting structure 437 and the first limiting structure 417 to be equal to the target interpupillary distance required by the individual user.
Step 3, for the same user, after one second-level interpupillary distance adjustment, the purpose of setting the first-level interpupillary distance adjustment range to be consistent with the interpupillary distance required by the corresponding user himself/herself can be achieved. When the user uses the device next time, the user only needs to apply a slight and comfortable first rotational external force. When rotating the assembly of the right lens barrel assembly 32 and the right bridge connecting member 22, feeling that the second limiting structure 437 of the rotary adjustment member 43' abuts against the first limiting structure 417 in the receiving hole 410 to adjust to the physical limit position, the interpupillary distance at this time is exactly suitable for this person's interpupillary distance. This avoids the time required for interpupillary distance adjustment and simplifies the adjustment process.

When the multi-ocular observation device is changed to a different user, during interpupillary distance adjustment, the adjustment may be performed according to step 2, such that the tapered surface of the insertion portion 23 of the right bridge connecting member 22 overcomes the first-level frictional force between the mating surface and the rotary adjustment member 43' to rotate, thereby re-adjusting the angle of the right bridge connecting member 22 relative to the bridge frame 10 corresponding to the physical limit position at which the second limiting structure 437 of the rotary adjustment member 43' abuts against the first limiting structure 417 in the receiving hole 410.

The above are only specific embodiments of the present application, but the protection scope of the present application is not limited thereto. Any person skilled in the art to which the present application pertains can easily conceive of variations or substitutions within the technical scope disclosed by the present application, which shall all be encompassed within the protection scope of the present application. Therefore, the protection scope of the present application shall be subject to the protection scope of the claims.

## Claims

1. An interpupillary distance adjustment structure, comprising:
a bridge frame (10);
a bridge connecting member (20) for rotatably connecting a lens barrel assembly (30) to the bridge frame (10); and
an adjustment assembly (40) connected to the bridge frame (10);
wherein one of the bridge connecting member (20) and the adjustment assembly (40) is provided with an insertion portion (23), and the other of the adjustment assembly (40) and the bridge connecting member (20) comprises a sleeved portion (431) corresponding to the insertion portion (23), a mating surface between the insertion portion (23) and the sleeved portion (431) is an inclined surface;
under an action of a rotational external force, the bridge connecting member (20) rotates relative to the bridge frame (10) to adjust to a target interpupillary distance; and after the external force is removed, the inclined surface provides an axial friction force and a radial friction force to maintain the target interpupillary distance.

2. The interpupillary distance adjustment structure according to claim 1, wherein the adjustment assembly (40) comprises a plate adapter (41) and a locking member (43);
the plate adapter (41) connects the bridge connecting member (20) to the bridge frame (10);
the locking member (43) is disposed on the plate adapter (41), the sleeved portion (431) is disposed on the adjustment assembly (40), the sleeved portion (431) comprises a mounting hole disposed on the locking member (43), an inner surface of the mounting hole is a first inclined surface (230), and the locking member (43) is rotatably sleeved on the insertion portion (23) through the mounting hole.

3. The interpupillary distance adjustment structure according to claim 2, wherein an outer contour of the insertion portion (23) is tapered, and the first inclined surface (230) is a tapered surface matching the insertion portion (23).

4. The interpupillary distance adjustment structure according to claim 2, wherein the plate adapter (41) is provided with a receiving hole (410), the locking member (43) is rotatably mounted in the receiving hole (410), an edge of an end of the plate adapter (41) at the receiving hole (410) close to an observation side is provided with a rib (414), and the locking member (43) comprises a protrusion (434) corresponding to the rib (414);
the protrusion (434) and the rib (414) are located on the same annular surface and spaced apart from each other, and during the process in which the bridge connecting member (20) rotates relative to the bridge frame (10), the protrusion (434) rotates relative to the rib (414).

5. The interpupillary distance adjustment structure according to claim 4, wherein the rib (414) is arc-shaped and comprises a first end (415) and a second end (416);
the protrusion (434) comprises a first stop side (435) corresponding to the first end (415) and a second stop side (436) corresponding to the second end (416);
during the process in which the protrusion (434) rotates relative to the rib (414), a first-level interpupillary distance adjustment range is defined and formed by the first end (415) of the rib (414) abutting against the first stop side (435) and the second end (416) abutting against the second stop side (436).

6. The interpupillary distance adjustment structure according to claim 5, wherein during the process in which the protrusion (434) rotates relative to the rib (414), under the condition that the first end (415) of the rib (414) abuts against the first stop side (435) or the second end (416) abuts against the second stop side (436), when a relatively larger rotational external force is applied, the bridge connecting member (20) rotates relative to the bridge frame (10) to form a second-level interpupillary distance adjustment range.

7. The interpupillary distance adjustment structure according to claim 1, wherein the adjustment assembly (40) comprises a plate adapter (41) and a rotary adjustment member (43'), the plate adapter (41) connects the bridge connecting member (20) to the bridge frame (10), the rotary adjustment member (43') is disposed on the plate adapter (41), the sleeved portion (431) comprises a mounting hole disposed on the rotary adjustment member (43'), an inner surface of the mounting hole is a second inclined surface (430), and the rotary adjustment member (43') is rotatably sleeved on the insertion portion (23) through the mounting hole.

8. The interpupillary distance adjustment structure according to claim 7, wherein the plate adapter (41) is provided with a receiving hole (410), the rotary adjustment member (43') is rotatably mounted in the receiving hole (410), and a limiting structure is provided between an inner circumferential surface of the receiving hole (410) and an outer circumferential surface of the rotary adjustment member (43'), the limiting structure being configured to limit a rotational limit range of the rotary adjustment member (43') within the receiving hole (410).

9. The interpupillary distance adjustment structure according to claim 8, wherein the limiting structure comprises a first limiting structure (417) disposed on the inner circumferential surface of the receiving hole (410), and a second limiting structure (437) disposed on the outer circumferential surface of the rotary adjustment member (43');
during the rotation of the rotary adjustment member (43') in the receiving hole (410), the abutment of the second limiting structure (437) against one side of the first limiting structure (417) is taken as a first rotational limit position, and the abutment of the second limiting structure (437) against the other side of the first limiting structure (417) is taken as a second rotational limit position.

10. The interpupillary distance adjustment structure according to claim 9, wherein when a first rotational external force is applied to the bridge connecting member (20), the rotary adjustment member (43') rotates relative to the receiving hole (410), and the rotation of the second limiting structure (437) between the first rotational limit position and the second rotational limit position defines a first-level interpupillary distance adjustment range;
when the second limiting structure (437) is at the first rotational limit position and/or the second rotational limit position, when a second rotational external force greater than the first rotational external force is applied to the bridge connecting member (20), the rotary adjustment member (43') rotates relative to the insertion portion (23) to define a second-level interpupillary distance adjustment range, and at this time, the relative position between the second limiting structure (437) and the first limiting structure (417) changes.

11. The interpupillary distance adjustment structure according to claim 10, wherein an outer contour of the insertion portion (23) is tapered, the rotary adjustment member (43') is provided internally with the mounting hole, and the second inclined surface (430) is a tapered surface matching the insertion portion (23);
under the action of the first rotational external force, the rotary adjustment member (43') rotates in the receiving hole (410) to adjust to a target interpupillary distance within a first-level interpupillary distance adjustment range; upon removal of the first rotational external force, the tapered surface between the insertion portion (23) and the rotary adjustment member (43') provides an axial friction force and a radial friction force to maintain the target interpupillary distance;
under the action of the second rotational external force, the rotary adjustment member (43') overcomes the axial friction force and the radial friction force to rotate relative to the insertion portion (23), and the position of the first rotational limit position and/or the second rotational limit position changes, thereby causing the first-level interpupillary distance adjustment range to change.

12. The interpupillary distance adjustment structure according to claim 9, wherein the first limiting structure (417) comprises a first limiting rib disposed on the inner circumferential surface of the receiving hole (410); and the second limiting structure (437) comprises a second limiting rib disposed on the outer circumferential surface of the rotary adjustment member (43').

13. The interpupillary distance adjustment structure according to claim 9, wherein the first limiting structure (417) comprises two protruding portions spaced apart along a circumferential direction of the receiving hole (410); and/or, the second limiting structure (437) comprises an arc-shaped protrusion extending along a circumferential direction of the rotary adjustment member (43') for a certain length;
the abutment of the arc-shaped protrusion against one of the two protruding portions is a first rotational limit position, and the abutment of the arc-shaped protrusion against the other of the two protruding portions is a second rotational limit position.

14. The interpupillary distance adjustment structure according to claim 2 or 7, wherein the plate adapter (41) comprises a first connecting portion (411) connected to the bridge frame (10), the first connecting portion (411) comprises a first connecting hole and a second connecting hole disposed on different sides;
a first fastener (61) passes through the bridge frame (10) and is connected to the first connecting hole, and a second fastener (62) passes through the second connecting hole and is connected to the bridge frame (10), thereby connecting the plate adapter (41) to the bridge frame (10).

15. The interpupillary distance adjustment structure according to claim 14, wherein a threaded sleeve or a heat staking nut is provided at a position on the bridge frame (10) for connection with the second fastener (62).

16. The interpupillary distance adjustment structure according to claim 2 or 7, wherein the plate adapter (41) comprises a second connecting portion (412) connected to the bridge connecting member (20), the second connecting portion (412) is provided with a receiving hole (410), the locking member (43) is rotatably mounted in the receiving hole (410), and a third fastener (63) passes through the locking member (43) and is connected to the bridge connecting member (20), thereby connecting the plate adapter (41) to the bridge connecting member (20).

17. The interpupillary distance adjustment structure according to claim 16, wherein a threaded sleeve or a heat staking nut is provided at a position on the bridge connecting member (20) for connection with the third fastener (63); and/or,
a washer (64) is disposed between an end face of the third fastener (63) and an end face abutting against the locking member (43), and an outer diameter of the washer (64) is greater than an outer diameter of an end portion of the third fastener (63).

18. The interpupillary distance adjustment structure according to claim 2 or 7, wherein the bridge connecting member (20) comprises a left bridge connecting member and a right bridge connecting member corresponding to a left lens barrel assembly (31) and a right lens barrel assembly (32) respectively, and the plate adapter (41) comprises a left plate adapter and a right plate adapter corresponding to the left bridge connecting member and the right bridge connecting member respectively;
a side of each of the left plate adapter and the right plate adapter abutting against an end face of the bridge frame (10) is provided with a groove and a back-up spring washer (65) fitted in the groove.

19. A multi-ocular observation device, comprising a left lens barrel assembly (31), a right lens barrel assembly (32), and the interpupillary distance adjustment structure (60) according to any one of claims 1-18;
wherein the left lens barrel assembly (31) and the right lens barrel assembly (32) are respectively connected to the bridge frame (10) through corresponding bridge connecting members (20).
